# EUROPÄISCHE PATENTANMELDUNG

(11) **EP 1 785 202 A1**
(43) Veröffentlichungstag der Anmeldung: **16.05.2007**
(21) Anmeldenummer: 05024695.8
(22) Anmeldetag: 11.11.2005
(51) Int. Cl.: B09C 1/06, B09B 3/00, F26B 3/00

(54) **Vorrichtung und Verfahren zur Reinigung kontaminierter Materialien**

(71) Anmelder: Daub, Roman, 66740 Saarlouis (DE); Hautz, Axel, 66571 Dirmingen (DE)
(72) Erfinder: Daub, Roman, 66740 Saarlouis (DE); Hautz, Axel, 66571 Dimingen (DE)
(74) Vertreter: Grünecker, Kinkeldey, Stockmair & Schwanhäusser Anwaltssozietät

(57) **Zusammenfassung**

Die Erfindung betrifft einen Bausatz zum Herstellen einer Anlage für die Aufbereitung von kontaminierten Materialien. Mit Hlife dieser Anlage sollen auch höhermolekulare organische Verbindungen sowie Schwermetalle aus kontaminierten Materialien entfernt werden. Zudem soll die Anlage hinsichtlich Platzbedarf und benötigten Apparaten auf den jeweiligen Anwendungsfall angepasst werden können. Dazu ist der Bausatz modular aufgebaut und besteht aus einem ersten Modul (1) für die Abtrennung niedermolekularer Verbindungen, einem weiteren Modul (23) für die Abtrennung von Wasser und/oder von höhermolekularen Verbindungen und einem weiteren Modul (36) für die Entfernung von Schwermetallen. Die Erfindung betrifft auch eine Aufreinigungs- bzw. Trocknungsverfahren, das mit Hilfe dieser Anlage durchgeführt wird.

## Beschreibung

Die Erfindung betrifft einen Bausatz zum Herstellen einer Anlage zur Aufbereitung von kontaminierten Materialien.

Die Aufbereitung von kontaminierten Materialien, die z.B. bei industrieller Produktion anfallen oder als Altlasten vorhanden sind, ist ein wichtiger Schritt zur Vermeidung von Umweltbelastungen. Der Eintrag von gefährlichen Stoffen aus der industriellen Produktion in die Umwelt wird vermieden, durch Altlasten bereits kontaminierte Flächen, die durch den sorglosen Umgang mit umwelt- bzw. wassergefährdeten Stoffen entstanden sind, werden behandelt. Die durch Altlasten entstehenden Gefahren, wie Beeinträchtigung der Bodennutzung bis hin zu Bewirtschaftungsverbot von verunreinigten Flächen sowie Grundwasserverunreinigungen, können so vermieden werden.

Aus dem Stand der Technik sind bereits entsprechende Vorrichtungen und Verfahren bekannt. So wird in der europäischen Patentschrift EP 0 896 838 E1 eine Vorrichtung zur Reinigung kontaminierter Materialien beschrieben. Diese Vorrichtung umfasst eine Trockenkammer und eine Dekontaminationskammer. In der Trockenkammer wird das kontaminierte Material unter Vakuum auf mäßige Temperaturen von etwa 50°C erwärmt. Nach Erreichen des gewünschten Trocknungsgrads wird das Material aus der Trockenkammer in die Dekontaminationskammer überführt. Mit einem Druck von etwa 10 mbar und einer Maximaltemperatur von 300°C werden weitere Verunreinigungen aus dem Material entfernt. Nach dem Ende des Reinigungsprozesses wird das schadstofffreie Material befeuchtet und kann wieder eingesetzt werden.

Nachteilig an dieser Vorrichtung ist jedoch, dass keine Einrichtung zur Entfernung höhermolekularer Verunreinigungen mit hohem Siedepunkt und keine Einrichtung zur Entfernung von eventuell in den Materialien enthaltenen Schwermetallen vorgesehen sind. Auch die Behandlung von flüssigen oder pastösen Materialien, vor allem bei einem Wassergehalt größer 60 %, bereitet Probleme, da diese Materialien nicht rieselfähig sind und mit dem vorhandenen Mischwerk nicht bzw. nur schlecht bewegt und ausgetragen werden.

Es ist daher Aufgabe der vorliegenden Erfindung eine einfache energieeffiziente Vorrichtung und ein dazugehöriges Verfahren zur Reinigung von kontaminierten Materialien und zur Trocknung von feuchten, pastösen und flüssigen Produkten bereit zu stellen, mit der auch höhermolekulare Verbindungen sowie Schwermetalle entfernt werden können. Zudem soll die Erfindung durch geeigneten Aufbau an unterschiedliche Anwendungsfälle angepasst werden.

Hierzu ist erfindungsgemäß vorgesehen, dass der Bausatz modular aufgebaut ist und ein Modul für die Abtrennung von Wasser und/oder niedermolekularem Verbindungen und/oder ein weiteres Modul für die Abtrennung höhermolekularer Verbindungen und/oder ein weiteres Modul für die Entfernung von Schwermetallen, wie z.B. Quecksilber und Cadmium, umfasst. Durch den modularen Aufbau kann die Anlage an den jeweiligen Anwendungsfall angepasst werden und enthält nur die benötigten Module. Durch die modulare Anordnung ist die Anlage für nahezu jeden Anwendungsfall geeignet.

Bei einer vorteilhaften Ausführungsform ist vorgesehen, dass das Modul für die Abtrennung von Wasser und/oder niedermolekularen Verbindungen einen beheizbaren Trockner mit mindestens einer Kondensatoreinheit, wobei der Trockner bei verschiedenen Temperaturen und Drücken betreibbar ist, eine Einrichtung zur Kühlung des gereinigten Materials und, soweit erforderlich, eine Einrichtung zur Wiederbefeuchtung des gereinigten Materials umfasst. Das Modul kann somit auch unabhängig betrieben werden.

Vorteilhafterweise umfasst eine Kondensatoreinheit einen Strahlwäscher, einen Kondensatsammelbehälter für die Abscheidung des am Strahlwäscher entstehenden Kondensats, einen Demistor, einen Wärmetauscher und mindestens eine der Kondensatoreinheiten eine Einrichtung zur Erzeugung eines Vakuums im Trockner. Das Kondensat kann teilweise zur Kühlung der Brüden eingesetzt werden, die Abluft als Sekundärbrennluft für den Brenner, der zur Beheizung des Trockners eingesetzt wird.

In einer weiteren vorteilhaften Ausführungsform ist vorgesehen, dass das Modul für die Abtrennung höhermolekularerer Verbindungen einen weiteren beheizbaren Trockner, eine daran anschließende Brennkammer und Vorrichtungen zur Kühlung der Abluft, umfasst. Somit ist auch dieses Modul separat einsetzbar.

Vorteilhafterweise sind ein Abhitzekessel und ein Quensch zur Kühlung der Abluft vorgesehen. Die bei der Kühlung der Abluft anfallende Wärmeenergie kann somit wieder in den Prozess zurückgeführt werden.

In einer alternativen Ausführungsform kann vorgesehen werden, dass das Modul für die Abtrennung höhermolekularer Verbindungen einen weiteren beheizbaren Trockner und einen mindestens einstufigen Kondensator umfasst. Mit dem Kondensator werden die aus dem Trockner abgeführten Brüden aufbereitet, der Kondensator muss somit für die Abtrennung höhermolekularer Verbindungen geeignet sein.

Gemäß einer weiteren Variante ist vorgesehen, dass das Modul für die Entfernung von Schwermetallen im Anschluss an den Kondensatablauf des Moduls für die Abtrennung höhermolekularer Verbindungen angeordnet ist und einen Fällkessel, eine Einrichtung zur Zudosierung von Fällungsmitteln und eine Einrichtung zur Abtastung der ausgefällten Feststoffe aus dem Kondensat umfasst. Auch dieses Modul kann unabhängig von den beiden anderen Modulen genutzt werden, um Schwermetalle aus Flüssigkeiten abzuscheiden.

Darüber hinaus bezieht sich die Erfindung auch auf ein Verfahren zur Aufbereitung von kontaminierten Materialien mit einem oben beschriebenen Bausatz, das folgende Schritte umfasst:
Abtrennung niedermolekularer Verbindungen in einem ersten Modul, in dem kontaminiertes Material in einen beheizten Trockner eingefüllt wird, das kontaminierte Material auf eine Temperatur im Bereich von 100°C bis 150°C aufgeheizt wird, die entstehenden Brüden über eine Kondensatoreinheit abgeführt werden, nach einer Verweilzeit die Produkttemperatur des kontaminierten Materials auf etwa 300°C erhöht und ein Vakuum im Trockner erzeugt wird, entstehende Brüden über eine Kondensatoreinheit abgeführt werden,
Abtrennung höhermolekularer Verbindungen in einem weiteren Modul, in dem das Material in einen weiteren Trockner überführt und auf eine Temperatur von etwa 400°C bis 800°C erwärmt wird,
Abtrennen von Schwermetallen in einem weiteren Modul, indem die bei der Abtrennung höher molekularer Verbindungen entstehenden Brüden nachbehandelt werden, das dabei anfallende Abwasser mit geeigneten Mitteln behandelt wird, um die Schwermetalle auszufällen und die entstehenden Feststoffe abgetrennt werden, Abkühlen und Rückbefeuchten des gereinigten Materials.

Das Verfahren hat entsprechend den Vorteil, dass sowohl niedermolekulare Verbindungen als auch höhermolekulare Verbindungen und Schwermetalle aus kontaminierten Materialien abgetrennt werden und das gereinigte Material nach dem Verfahren wiedereinsetzbar ist.

Gemäß einer weiteren Ausführungsform ist vorgesehen, dass die einzelnen Module unabhängig voneinander betrieben werden können. Durch die modulare Ausführungsform kann das Verfahren somit an nahezu jeden Anwendungsfall angepasst werden.

Weiterhin ist vorteilhafterweise vorgesehen, dass die bei der Abtrennung niedermolekularer Verbindungen in den zwei Temperaturbereichen entstehenden Brüden umschaltbar in verschiedene Kondensatoreinheiten abgeführt werden, wobei bei Erhöhung der Temperatur im Trockner das Umschalten von einer ersten auf eine weitere Kondensatoreinheit erfolgt. Bereits im ersten Abtrennungsschritt werden die bei den unterschiedlichen Temperaturen anfallenden Brüden getrennt und können weiteren Aufbereitungs- bzw. internen/externen Entsorgungsschritten zugeführt werden.

In einer weiteren Ausführungsform ist vorgesehen, dass die Brüden in den Kondensatoreinheiten zumindest teilweise kondensiert werden und die entstehende flüssige Phase dem Abwasser oder einer internen oder externen Entsorgung zugeführt wird und die entstehende gasförmige Phase als Sekundärbrennluft für den Brenner zur Beheizung des Trockners genutzt wird. Somit ist eine energieeffiziente Nutzung des Verfahrens möglich.

Gemäß einer weiteren Variante ist vorgesehen, dass die bei der Abtrennung höhermolekularer Verbindungen im Trockner entstehenden Brüden nachverbrannt, die entstehende Abhitze verwertet und die immer noch heiße Abluft über einen Quensch gekühlt und über einen Kamin abgeführt wird. Auch in diesem Schritt wird entstehende Wärmeenergie wieder dem Verfahren zugeführt, eine energieeffiziente Nutzung wird ermöglicht.

Alternativ kann auch vorgesehen werden, dass die bei der Abtrennung höhermolekularer Verbindungen im Trockner entstehenden Brüden in einen mindestens einstufigen Kondensator abgeführt werden. Auch auf diese Weise ist eine Abluftaufbereitung an dem Trockner möglich.

Im Folgenden werden Ausführungsformen der Erfindung anhand einer Zeichnung näher erläutert. Es zeigen:
- Fig. 1: Fließbild des Moduls zur Abtrennung von Wasser und/oder niedermolekularen Verbindungen,
- Fig. 2: Fließbild der Module zur Abtrennung niedermolekularer und höhermolekularer Verbindungen und
- Fig. 3: Fließbild der Module zur Abtrennung niedermolekularer Verbindungen, höhermolekularer Verbindungen und von Schwermetallen, wie Quecksilber oder Cadmium.

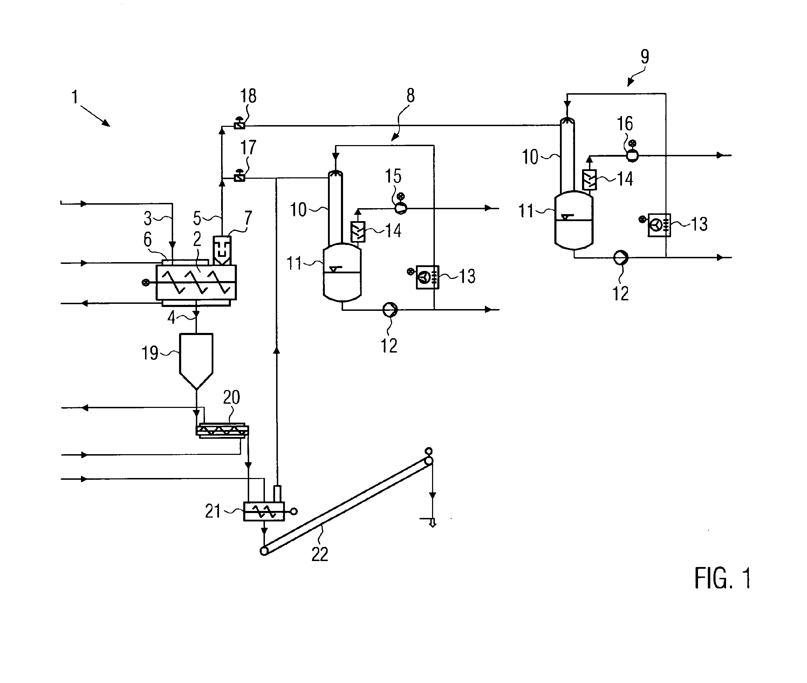

In Fig. 1 ist das Modul 1 zur Abtrennung niedermolekularer Verbindungen aus dem kontaminierten Material dargestellt. Dieses Modul 1 umfasst einen direkt oder indirekt beheizbaren Trockner 2 mit einem Feststoffeingang 3, einem Feststoffausgang 4 und einem Ausgang 5 für die im Trockner 2 entstehenden Brüden. Die indirekte Beheizung des Trockners 2 kann beispielsweise erfolgen, indem heißes Thermalöl durch einen Heizmantel 6 geleitet wird. Es wäre aber auch eine direkte Beheizung z.B. über einen Brenner denkbar. Diese Beheizungseinrichtungen sind ebenfalls Bestandteile des Moduls 1. Am Brüdenausgang 5 ist ein Brüdenfilter 7 angebracht, der verhindert, dass mit den Brüden Feststoffpartikel in die Kondensatoreinheiten 8, 9 eingetragen werden. Die Kondensatoreinheiten 8, 9 sind nahezu identisch aufgebaut. In einem Strahlenwäscher 10 werden die Brüden gekühlt und kondensieren zumindest teilweise. In einem Kondensatsammelbehälter 11 wird das Kondensat von der verbleibenden Gasphase getrennt. Über eine Pumpe 12 wird das Kondensat dem Abwasser bzw. einem Schadstoffsammelbehälter zugeführt. Ein Teil des Kondensats wird über einen Wärmetauscher 13 gekühlt und in den Strahlwäscher 10 zurückgeführt, um die Brüden abzukühlen und zum Kondensieren zu bringen. Die Abluft aus dem Kondensatsammelbehälter 11 wird über einen Demistor 14 und ein Gebläse 15 abgeführt und als Sekundärbrennluft für den Brenner zur Beheizung des Trockners 2 genutzt. Gegebenenfalls wird die Abluft vor dem Brenner über eine Aktivkohleeinheit aufgereinigt. Durch den Demistor 14 wird verhindert, dass Flüssigkeitstropfen von der Abluft mitgerissen werden.

In der zweiten Kondensatoreinheit 9 ist anstelle des Gebläses 15 eine Vakuumpumpe 16 angeordnet. Über die Ventile 17 und 18 kann eingestellt werden, ob die Brüden in die Kondensatoreinheit 8 oder die Kondensatoreinheit 9 abgeführt werden. Ist der Trockner 2 mit der Kondensatoreinheit 9 verbunden, so wird über die Vakuumpumpe 16 ein Vakuum im Trockner 2 erzeugt. Auf diese Weise ist es möglich, auch Verbindungen mit einem hohen Siedpunkt aus dem im Trockner befindlichen Material zu entfernen.

Im Anschluss an den Feststoffausgang 4 des Trockners 2 ist ein Zwischenbunker 19 angeordnet. Hinter dem Zwischenbunker 19 befindet sich eine Kühlschnecke 20 sowie ein Rückbefeuchtungsmischer 21. Im Anschluss an den Rückbefeuchtungsmischer 21 ist ein Förderband 22 angeordnet.

Das Verfahren zur Entfernung von Wasser und/oder niedermolekularen Verbindungen aus dem kontaminierten Material läuft folgendermaßen ab:

Über den Feststoffeingang 3 wird kontaminiertes Material in den direkt oder indirekt beheizbaren Trockner 2 befördert. Über die Heizung des Trockners 2, also beispielsweise den Heizmantel 6, wird das kontaminierte Material auf eine erste Temperatur aufgeheizt. Diese erste Temperatur liegt im Bereich von 100°C bis 150°C und beträgt vorzugsweise 130°C. Während der ersten Trocknungsphase herrscht im Trockner 2 Normaldruck. In dem kontaminierten Material enthaltene Verbindungen mit einem Siedepunkt niedriger als 130°C verdampfen und werden als Brüden über den Brüdenfilter 7 in die Kondensatoreinheit 8 abgezogen. Das Ventil 17 ist also geöffnet, das Ventil 18 geschlossen. Die Brüden werden in den Strahlwäscher 10 geführt und mit bereits kondensierten Brüden abgekühlt und zum Kondensieren gebracht. Im Kondensatsammelbehälter 11 wird die Flüssigkeit von der restlichen gasförmigen Phase getrennt, die noch warme gasförmige Phase wird über den Demistor 14 und das Gebläse 15 abgeführt und als Sekundärbrennluft für den Brenner zur Beheizung des Trockners 2 genutzt. Das Kondensat wird über eine Pumpe 12 dem Abwasser oder einem Schadstoffsammelbehälter zugeführt. Ein Teil des Kondensats wird abgezweigt, in einem Wärmetauscher 13 gekühlt und zurück in den Strahlwäscher geführt.

Wenn der gewünschte Trocknungsgrad erreicht wird, wird das Ventil 17 geschlossen und das Ventil 18 geöffnet. Die im Trockner 2 entstehenden Brüden werden nun in die Kondensatoreinheit 9 abgeführt. Gleichzeitig wird die Temperatur im Trockner 2 erhöht, auf eine Produkttemperatur von etwa 300°C. Über die Vakuumpumpe 16 wird ein Vakuum in dem Trockner 2 erzeugt. Somit ist es möglich, auch solche Verbindungen aus dem kontaminierten Material zu entfernen, deren Siedepunkt über 300°C liegt. Die Aufbereitung der in diesem Schritt entstehenden Brüden erfolgt analog zur Aufbereitung im ersten Schritt. Die Brüden werden über den Brüdenfilter 7 in die Kondensatoreinheit 9 geführt. In dem Strahlwäscher 10 werden die Brüden gekühlt und kondensieren. In dem Kondensatsammelbehälter 11 wird das Kondensat von der verbleibenden Abluft getrennt. Die Abluft wird über den Demistor 14 und die Vakuumpumpe 16 abgeführt und als Sekundärbrennluft für den Brenner zur Beheizung des Trockners 2 genutzt. Gegebenenfalls wird die Abluft vor dem Brenner über eine Aktivkohleeinheit aufgereinigt. Ein Teil des Kondensats wird über einen Wärmetauscher 13 in den Strahlwäscher 10 zurückgeführt und dort eingesetzt, um die aus dem Trockner 2 ankommenden Brüden zu kondensieren. Der Rest des Kondensats wird über die Pumpe 12 dem Abwasser oder einem Schadstoffsammelbehälter zugeführt.

Ist auch in diesem Trocknungsschritt der gewünschte Trockungsgrad erreicht, so wird der Feststoffausgang 4 des Trockners 2 geöffnet und der getrocknete und gereinigte Feststoff in den Zwischenbunker 19 überführt. Das Trocknungsverfahren in Modul 1 ist also diskontinuierlich. Aus dem Zwischenbunker 19 wird der Feststoff in die Kühlschnecke 20 gefördert und dort auf Temperaturen im Bereich von 30°C bis 60°C gekühlt. Nach dem Abkühlen wird der Feststoff in den Rückbefeuchtungsmischer 21 überführt und dort mit einer festgelegten Wassermenge vermischt, so dass die gewünschte Feuchtigkeit des Materials erreicht wird. Über das Förderband 22 wird der gereinigte und rückbefeuchtete Feststoff abtransportiert. Für Anwendungsfälle, in denen der Feststoff nicht gekühlt und rückbefeuchtet werden soll, haben die Kühlschnecke 20 und der Rückbefeuchtungsmischer 21 lediglich eine Förderfunktion.

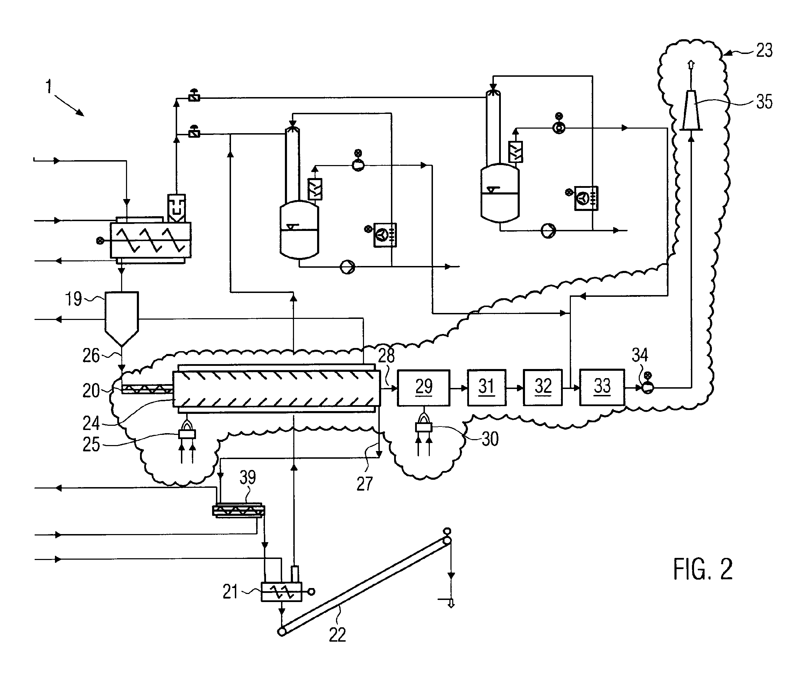

Fig. 2 zeigt eine Anlage zur Reinigung kontaminierter Böden, bestehend aus dem Modul 1 zur Abtrennung niedermolekularer Verbindungen und dem Modul 23 zur Abtrennung höhermolekularerer Verbindungen. Im Bedarfsfall wird dieses Modul 23 hinter dem Zwischenbunker 19 und der Schnecke 20 eingefügt. Das Material wird in der Schnecke 20 in diesem Fall nicht gekühlt, sondern nur gefördert. Das Modul 23 umfasst einen weiteren direkt oder indirekt beheizbaren Trockner 24, beispielsweise ein Drehrohr. Das Modul 23 kann kontinuierlich betrieben werden. Der Trockner 24 ist beispielsweise über einen Brenner 25 beheizbar. Es ist auch eine indirekte Beheizung des Trockners 24, beispielsweise über einen Heizmantel, denkbar. Die Einrichtungen zur Beheizung des Trockners 24 sind ebenfalls Bestandteil des Moduls 23. Der Trockner 24 weist wiederum einen Feststoffeingang 26, einen Feststoffausgang 27 und einen Abluftausgang 28 aus. Im Anschluss an den Abluftausgang 28 ist eine Brennkammer 29 mit entsprechenden Brenner 30 angeordnet. An die Brennkammer 29 schließt sich eine Abhitzeverwertung 31 und ein Quensch 32 an. Über einen Rauchgasreiniger 33 und ein Gebläse 34 wird die Abluft über einen Kamin 35 abgeführt.

Im Anschluss an den Feststoffausgang 27 des Trockners 24 sind eine weitere Kühlschnecke 39, der Rückbefeuchtungsmischer 21 sowie das Förderband 22 angeordnet.

Sollen aus dem kontaminierten Material auch höhermolekulare Verbindungen abgetrennt werden, so wird in folgenden Schritten vorgegangen:

Das in Modul 1 getrocknete bzw. getrocknete und vorgereinigte Material wird in den Zwischenbunker 19 überführt und von dort in einen weiteren Trockner 24 gefördert. Über den Brenner 25 wird die gewünschte Temperatur im Trockner 24 eingestellt, vorzugsweise liegt die Trocknungstemperatur im Bereich von 400°C bis 800°C. Der dargestellte Trockner wird also direkt beheizt. Es wäre aber auch eine indirekte Beheizung des Trockners 24 möglich. Über das Gebläse 34 wird ein Saugzug in dem Modul 23 eingestellt, so dass die Abluft aus dem Trockner 24 in die Brennkammer 25 gezogen wird. In der Brennkammer 25 werden in der Abluft enthaltene organische Verbindungen verbrannt. Im Anschluss daran wird die Abluft dem Abhitzekessel 31 zugeführt, so dass die bei der Trocknung und Verbrennung entstehende Wärme weiter genutzt werden kann. Aus dem Abhitzekessel 31 wird die Abluft in den Quensch 32 überführt und dort schockartig durch Eindüsen von Flüssigkeit abgekühlt. Alternaiv kann anstelle der Brennkammer 25 und des Quensch 32 auch ein mindestens einstufiger Kondensator zur Abtrennung höhermolekularer Verbindungen aus der Abluft eingesetzt werden. Mit Hilfe einer Rauchgasreinigung 33 wird sichergestellt, dass in der Abluft, die über den Kamin 35 abgeführt wird, keine relevanten Schadstoffmengen mehr enthalten sind. Bei der Nutzung eines mindestens einstufigen Kondensators wird die Abluft ebenfalls in einer Rauchgasreinigung 33 nachbehandelt, ein Teil der Abluft als Sekundärbrennluft für den Brenner zur Beheizung des Trockners 24 genutzt, der Rest der Abluft über den Kamin 35 abgeführt. Eine im Kondensator entstehende zähflüssige bzw. feste Phase wird einer externen Verwertung zugeführt. Entsteht auch eine flüssige bzw. wässrige Phase in dem Kondensator, so kann diese im Modul 36 aufbereitet werden. Das gereinigte und getrocknete Material wird bei Bedarf in der Kühlschnecke 39 gekühlt, über den Rückbefeuchtungsmischer 21 auf den gewünschten Feuchtigkeitsgehalt eingestellt und über das Förderband 22 abtransportiert. Soll das Material nicht gekühlt und rückbefeuchtet werden, so haben die Kühlschnecke 39 und der Rückbefeuchtungsmischer 21 nur eine Transportfunktion.

Die Module 1, 23 können auch zur Trocknung feuchter Materialien eingesetzt werden.

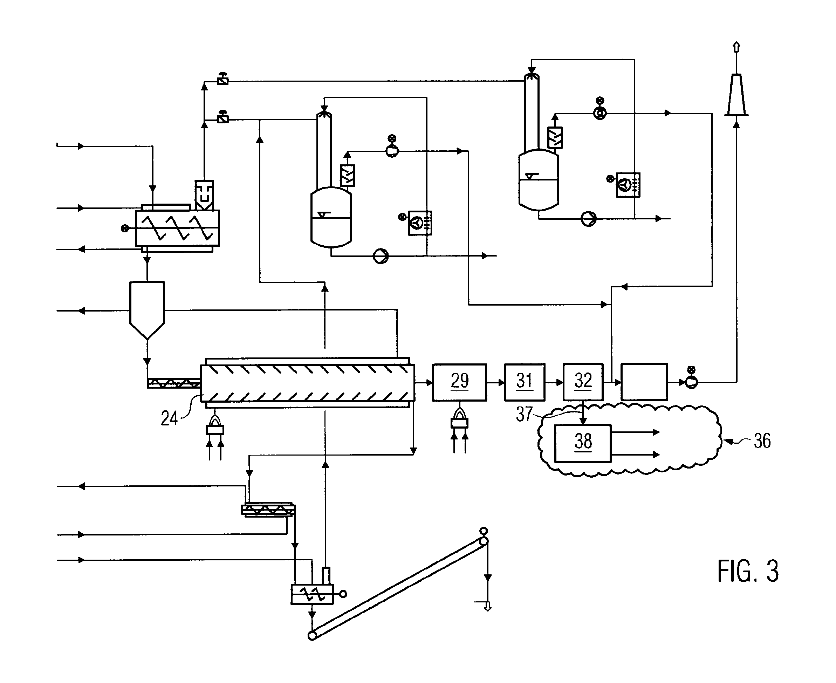

In Fig. 3 ist eine Anlage für die Aufbereitung von kontaminierten Material mit dem Modul 36 zur Abtrennung von Schwermetallen dargestellt. Dieses Modul 36 schließt sich an den Kondensatausgang 37 des Moduls 23 an und umfasst einen Fäll- und Schlammabscheidebehälter 38.

Enthält das kontaminierte Material auch Schwermetalle, wie z.B. Quecksilber oder Cadmium, so wird das folgende Reinigungsverfahren angewandt. Die aus dem Trockner 24 kommende Abluft wird in der Brennkammer 29 nachverbrannt, die entstehende Wärme wird über einen Abhitzekessel 31 genutzt und die noch warme Abluft in einem Quensch 32 schockartig gekühlt. Alternativ wird die Abluft aus dem Trockner 24 in einem mindestens einstufigen Kondensator behandelt. Das im Quensch 32 bzw. dem alternativ einsetzbaren Kondensator anfallende Kondensat bzw. die wässrige/flüssige Phase wird über den Kondensatausgang 37 in den Fäll- und Schlammabscheidebehälter 38 überführt. In dem Fäll- und Schlammabscheidebehälter 38 wird ein geeignetes Fällungsmittel zu dem Kondensat zugegeben. Beispielsweise kann dafür Trimercaptotriazin eingesetzt werden. Das in dem Kondensat enthaltene Quecksilber verbindet sich mit dem Fällungsmittel und fällt aus. Die entstehende Schlammphase wird von der restlichen Flüssigkeit abgetrennt und einem Schadstoffsammelbehälter zugeführt. Die verbleibende Flüssigkeit wird dem Abwasser zugeführt.

Anstelle der Nassadsorption (Quensch) kann auch eine Trockenadsorption eingesetzt werden.

## Patentansprüche

1. Bausatz zum Herstellen einer Anlage für die Aufbereitung von kontaminierten Materialien, **dadurch gekennzeichnet, dass** der Bausatz modular aufgebaut ist und ein Modul (1) für die Abtrennung von Wasser und/oder niedermolekularen Verbindungen und/oder ein weiteres Modul (23) für die Abtrennung höhermolekularer Verbindungen und/oder ein weiteres Modul (36) für die Abtrennung von Schwermetallen, wie Quecksilber und Cadmium, umfasst.

2. Bausatz nach Anspruch 1, **dadurch gekennzeichnet, dass** das Modul (1) für die Abtrennung von Wasser und/oder niedermolekularen Verbindungen einen beheizbaren Trockner (2) mit mindestens einer Kondensatoreinheit (8,9), wobei der Trockner (2) bei verschiedenen Temperaturen und Drücken betreibbar ist, eine Einrichtung zur Kühlung des gereinigten Materials (20) und, soweit erforderlich, eine Einrichtung zur Wiederbefeuchtung des gereinigten Materials (21) umfasst.

3. Bausatz nach einem der Ansprüche 1 oder 2, **dadurch gekennzeichnet, dass** eine Kondensatoreinheit (8,9) einen Strahlwäscher (10), einen Kondensatsammelbehälter (11) für die Abscheidung des im Strahlwäscher (10) entstehenden Kondensats, einen Demistor (14), einen Wärmetauscher (13) und mindestens eine der Kondensatoreinheiten (8,9) eine Einrichtung zur Erzeugung eines Vakuums (16) im Trockner (2) umfasst.

4. Bausatz nach einem der Ansprüche 1 bis 3, **dadurch gekennzeichnet, dass** das Modul (23) für die Abtrennung höhermolekularer Verbindungen einen weiteren beheizbaren Trockner (24), eine daran anschließende Brennkammer (29) und Vorrichtungen zur Kühlungen der Abluft (31,32) umfasst.

5. Bausatz nach einem der Ansprüche 1 bis 4, **dadurch gekennzeichnet, dass** ein Abhitzekessel (31) und ein Quensch (32) zur Kühlung der Abluft vorgesehen sind.

6. Bausatz nach einem der Ansprüche 1 bis 3, **dadurch gekennzeichnet, dass** das Modul (23) für die Abtrennung höhermolekularer Verbindungen einen weiteren beheizbaren Trockner (24) und einen mindestens einstufigen Kondensator umfasst.

7. Bausatz nach einem der Ansprüche 1 bis 6, **dadurch gekennzeichnet, dass** das Modul (36) für die Entfernung von Schwermetallen im Anschluss an den Kondensatablauf (37) des Moduls (23) angeordnet ist und einen Fällkessel (38), eine Einrichtung zur Zudosierung von Fällungsmitteln und eine Einrichtung zur Abtrennung der ausgefällten Feststoffe von dem Kondensat umfasst.

8. Verfahren zur Aufbereitung von kontaminierten Materialien mit einem Bausatz nach einem der Ansprüche 1 bis 7, **gekennzeichnet durch** die folgenden Schritte:
Abtrennung niedermolekularere Verbindung in Modul (1), indem kontaminiertes Material in einem beheizten Trockner (2) eingefüllt wird, das kontaminierte Material auf eine Temperatur im Bereich von 100°C bis 150°C aufgeheizt wird, die entstehenden Brüden über eine Kondensatoreinheit (8) abgeführt werden, nach einer Verweilzeit die Produktemperatur des kontaminierten Materials auf etwa 300°C erhöht und ein Vakuum im Trockner (2) erzeugt wird, die entstehenden Brüden über eine Kondensatoreinheit (9) abgeführt werden;
Abtrennung höhermolekularer Verbindungen in Modul (23), indem das vorgereinigte Material in einen weiteren Trockner (24) überführt und auf eine Temperatur von etwa 400°C bis 800°C erwärmt wird;
Abtrennung von Schwermetallen in Modul (36), indem die bei der Abtrennung höhermolekularer Verbindungen entstehenden Brüden nachbehandelt, das dabei anfallende Abwasser mit geeigneten Mitteln behandelt wird, um die Schwermetalle auszufällen und die entstehenden Feststoffe abgetrennt werden;
Abkühlen und Rückbefeuchten des gereinigten Materials.

9. Verfahren nach Anspruch 8, **dadurch gekennzeichnet, dass** die Module (1,23,36) unabhängig voneinander betrieben werden können.

10. Verfahren nach einem der Ansprüche 8 oder 9, **dadurch gekennzeichnet, dass** die bei der Abtrennung niedermolekularer Verbindungen in den zwei Temperaturbereichen entstehenden Brüden umschaltbar in verschiedene Kondensatoreinheiten (8,9) abgeführt werden können, wobei bei Erhöhung der Temperatur im Trockner (2) das Umschalten von einer ersten (8) Kondensatoreinheit auf eine weitere Kondensatoreinheit (9) erfolgt.

11. Verfahren nach einem der Ansprüche 8 bis 10, **dadurch gekennzeichnet, dass** die Brüden in den Kondensatoreinheiten (8,9) zumindest teilweise kondensiert werden und das entstehende Kondensat dem Abwasser zugeführt wird und die verbleibende gasförmige Phase zur Beheizung des Trockners genutzt wird.

12. Verfahren nach einem der Ansprüche 8 bis 11, **dadurch gekennzeichnet, dass** die bei der Abtrennung höhermolekularer Verbindung im Trockner (24) entstehenden Brüden nachverbrannt, die entstehende Abhitze verwertet und die immer noch heiße Abluft über einen Quensch (32) gekühlt und über einen Kamin (35) abgeführt wird.

13. Verfahren nach einem der Ansprüche 8 bis 11, **dadurch gekennzeichnet, dass** die bei der Abtrennung höhermolekularer Verbindungen im Trockner (24) entstehenden Brüden in einen mindestens einstufigen Kondensator abgeführt werden.

## Geänderte Patentansprüche

### Geänderte Patentansprüche gemäss Regel 86(2) EPÜ.

**1.** Modular aufgebauter Bausatz zum Herstellen einer Anlage für die Aufbereitung von kontaminierten Materialien, mit einem Modul für die Abtrennung von Wasser und niedermolekularen Verbindungen (1) und einem weiteren Modul für die Abtrennung höhermolekularer Verbindungen (23), **dadurch gekennzeichnet, dass** das Modul für die Abtrennung von Wasser und niedermolekularen Verbindungen (1) einen beheizbaren Trockner (2) mit mindestens zwei Kondensatoreinheiten (8,9) umfasst, wobei der Trockner (2) in Abhängigkeit der Trocknungstemperatur mit je einer der Kondensatoreinheiten (8,9) verbunden ist.

**2.** Bausatz nach Anspruch 1, wobei das Modul für die Abtrennung von Wasser und niedermolekularen Verbindungen (1) eine Einrichtung zur Kühlung des gereinigten Materials (20) und, soweit erforderlich, eine Einrichtung zur Wiederbefeuchtung des gereinigten Materials (21) umfasst.

**3.** Bausatz nach einem der Ansprüche 1 oder 2, wobei eine Kondensatoreinheit (8,9) einen Strahlwäscher (10), einen Kondensatsammelbehälter (11) für die Abscheidung des im Strahlwäscher (10) entstehenden Kondensats, einen Demistor (14), einen Wärmetauscher (13) und mindestens eine der Kondensatoreinheiten (8,9) eine Einrichtung zur Erzeugung eines Vakuums (16) im Trockner (2) umfasst.

**4.** Bausatz nach einem der Ansprüche 1 bis 3, wobei das Modul für die Abtrennung höhermolekularer Verbindungen (23) einen Drehrohrofen (24), eine daran anschließende Brennkammer (29) und Vorrichtungen zur Kühlungen der Abluft (31,32) umfasst.

**5.** Bausatz nach einem der Ansprüche 1 bis 4, wobei ein Abhitzekessel (31) und ein Quensch (32) zur Kühlung der Abluft vorgesehen sind.

**6.** Bausatz nach einem der Ansprüche 1 bis 3, wobei das Modul für die Abtrennung höhermolekularer Verbindungen (23) einen Drehrohrofen (24) und einen mindestens einstufigen Kondensator umfasst.

**7.** Bausatz nach einem der Ansprüche 1 bis 6, wobei der Bausatz ein Modul für die Entfernung von Schwermetallen (36), wie Cadmium und Quecksilber, aufweist, das im Anschluss an den Kondensatablauf (37) des Moduls für die Abtrennung höhermolekularer Verbindungen (23) angeordnet ist und einen Fällkessel (38), eine Einrichtung zur Zudosierung von Fällungsmitteln und eine Einrichtung zur Abtrennung der ausgefällten Feststoffe von dem Kondensat umfasst.

**8.** Verfahren zur Aufbereitung von kontaminierten Materialien mit einem Bausatz nach einem der Ansprüche 1 bis 7, **gekennzeichnet durch** die folgenden Schritte:
Abtrennung niedermolekularer Verbindung in dem Modul für die Abtrennung von Wasser und niedermolekularen Verbindungen (1), indem kontaminiertes Material in einem beheizten Trockner (2) eingefüllt wird, das kontaminierte Material auf eine Temperatur im Bereich von 100°C bis 150°C aufgeheizt wird, die entstehenden Brüden über eine Kondensatoreinheit (8) abgeführt werden, nach einer Verweilzeit die Produktemperatur des kontaminierten Materials auf etwa 300°C erhöht und ein Vakuum im Trockner (2) erzeugt wird, die entstehenden Brüden über eine zweite Kondensatoreinheit (9) abgeführt werden;
Abtrennung höhermolekularer Verbindungen in dem Modul für die Abtrennung höhermolekularer Verbindungen (23), indem das vorgereinigte Material in einen Drehrohrofen (24) überführt und auf eine Temperatur von etwa 400°C bis 800°C erwärmt wird;
Abtrennung von Schwermetallen in dem Modul für die Abtrennung von Schwermetallen (36), indem die bei der Abtrennung höhermolekularer Verbindungen entstehenden Brüden nachbehandelt, das dabei anfallende Abwasser mit geeigneten Mitteln behandelt wird, um die Schwermetalle auszufällen und die entstehenden Feststoffe abgetrennt werden;
Abkühlen und Rückbefeuchten des gereinigten Materials.

**9.** Verfahren nach Anspruch 8, in dem das Modul für die Abtrennung von Wasser und niedermolekularen Verbindungen (1), das Modul für die Abtrennung höhermolekularer Verbindungen (23) und das Modul für die Abtrennung von Schwermetallen (36) unabhängig voneinander betrieben werden können.

**10.** Verfahren nach einem der Ansprüche 8 oder 9, in dem die bei der Abtrennung niedermolekularer Verbindungen in den zwei Temperaturbereichen entstehenden Brüden umschaltbar in verschiedene Kondensatoreinheiten (8,9) abgeführt werden können, wobei bei Erhöhung der Temperatur im Trockner (2) das Umschalten von einer ersten Kondensatoreinheit (8) auf eine weitere Kondensatoreinheit (9) erfolgt.

**11.** Verfahren nach einem der Ansprüche 8 bis 10, in dem die Brüden in den Kondensatoreinheiten (8,9) zumindest teilweise kondensiert werden und das entstehende Kondensat dem Abwasser zugeführt wird und die verbleibende gasförmige Phase zur Beheizung des Trockners genutzt wird.

**12.** Verfahren nach einem der Ansprüche 8 bis 11, in dem die bei der Abtrennung höhermolekularer Verbindung im Drehrohrofen (24) entstehenden Brüden nachverbrannt, die entstehende Abhitze verwertet und die immer noch heiße Abluft über einen Quensch (32) gekühlt und über einen Kamin (35) abgeführt wird.

**13.** Verfahren nach einem der Ansprüche 8 bis 11, in dem die bei der Abtrennung höhermolekularer Verbindungen im Drehrohrofen (24) entstehenden Brüden in einen mindestens einstufigen Kondensator abgeführt werden.
